# EUROPEAN PATENT APPLICATION

(11) **EP 2 141 367 A1**
(43) Date of publication of application: **06.01.2010**
(21) Application number: 09251423.1
(22) Date of filing: 28.05.2009
(51) Int. Cl.: F16B 21/04, A44C 5/20

(54) **A linkage device**

(30) Priority: 30.06.2008 GB 0811905
(62) Divisional of application: 09012618.6
(71) Applicant: Fox International Group Limited, Hainault, Essex IG6 3UT (GB)
(72) Inventor: Taylor, Adam, Loughton, Essex IG10 2QH (GB)
(74) Representative: Crouch, David John

(57) **Abstract**

A linkage device (34, 36) comprising a first part (34) having a first slot (40) in it with a cross-sectional shape having an inner portion and an outer portion, of narrower width than the inner portion, which opens out on to a first surface portion (58) of the first part (34). The said first part (34) also has a second slot (64) at an angle to the first slot (40) and opening out on to the said first surface portion (58) and also around to a second surface portion (66) of the said first part (34) which second surface portion (66) is generally at an angle to the said first surface portion (58). The linkage device also has a second part (36) having a head portion (38, 86) with a cross-section which is of less width than that of the inner portion of the cross-section of the said first slot (40), but is wider than the outer portion of the first slot (40) and is also wider than the second slot (64), so that it cannot escape therefrom. The said second part (36) also has a neck portion which is of narrower width than the outer portion of the said first slot (40) and which is of narrower width than the said second slot (64). The said second part (36) can therefore be inserted into and then slid along the said first slot (40), with the head portion (38, 86) of the second part (36) sliding within and along the inner portion of the first slot (40) and the neck portion sliding within and along the outer portion of the first slot (40), whereupon the second part (36) can be rotated so that its neck moves into the second slot (64) and a portion of the second part (36) protrudes from the said second surface portion (66) of the first part (34).

## Description

The present invention relates to a linkage device especially but not exclusively in a fish-bite indicator having the construction of a hanger.

One proposed construction for such a linkage device comprises a ring fixedly attached to a main body and coupled to the link of a chain.

A disadvantage of such a construction is that the main body and the chain are not readily detachable from one another.

The present invention seeks to provide a remedy.

Accordingly, the present invention is directed to a linkage device comprising a first part having a first slot in it with a cross-sectional shape having an inner portion and an outer portion, of narrower width than the inner portion, which opens out on to a first surface portion of the first part, and a second slot at an angle to the first slot and opening out on to the said first surface portion and also around to a second surface portion of the said first part which second surface portion is generally at an angle to the said first surface portion, and a second part having a head portion with a cross-section which is of less width than that of the inner portion of the cross-section of the said first slot, but is wider than the outer portion of the first slot and is also wider than the second slot, so that it cannot escape therefrom, the said second part also having a neck portion which is of narrower width than the outer portion of the said first slot and which is of narrower width than the said second slot, so that the said second part can be inserted into and then slid along the said first slot, with the head portion of the second part sliding within and along the inner portion of the first slot and the neck portion sliding within and along the outer portion of the first slot, whereupon the second part can be rotated so that its neck moves into the second slot and a portion of the second part protrudes from the said second surface portion of the first part.

The said angle between the first and second slots may be a right angle.

The said angle between the said first surface portion and the said second surface portion may be a right angle.

The cross-section of the first slot may have the shape of a keyhole.

Preferably, the said head portion comprises a ball-shaped portion, although it may alternatively comprise a cylindrical portion of generally circular cross-section.

Preferably, in one embodiment of such a linkage device, the said first and second parts are parts of a fish-bite indicator having the construction of a hanger.

More especially, the hanger may comprise a weight assembly and an attachment part coupled to the weight assembly by way of an elongate flexible part. The latter may comprise a chain.

It may be secured to the weight assembly by way of a linkage device in accordance with the present invention.

The weight assembly may comprise a retractable portion which projects from an upper end of the assembly as part of a fishing line engagement device, the said one end of the elongate flexible part being attached to that portion by way of the linkage device so that that portion is retracted to release the fishing line when the latter is raised beyond a predetermined height.

The other end of the chain or other elongate flexible part may be coupled to the attachment part also by way of a linked device in accordance with the present invention.

According to a second aspect of the present invention, there is provided an illuminator comprising a first generally cylindrical body along which extends a beta light cavity and a sleeve which can be slid onto the cylindrical body after a beta light has been inserted into the beta light cavity thereof, the sleeve having a slot in it which corresponds in position to the beta light cavity, the slot being narrower than the beta light cavity, so that light from the beta light within the cavity can pass through the slot, but not the beta light itself.

The illuminator may be part of a fish-bite indicator having the construction of a hanger.

The sleeve may be translucent. If it is translucent, it does not necessarily need a slot in it.

The sleeve may be secured to the cylindrical body by way of a bayonet attachment.

An example of a fish-bite indicator embodying the present invention will now be described by way of example with reference to the accompanying drawings, in which:
- Figure 1: is a side perspective view of the fish-bite indicator;
- Figure 2: shows a side view of a weight assembly of the indicator shown in Figure 1;
- Figure 3: shows a further side view of the weight assembly of the indicator shown in Figures 1 and 2, viewed at right angles to the line of view of Figure 2;
- Figure 4: shows an axial sectional view of the weight assembly of the indicator shown in Figure 1, in the plane indicated by the line IV-IV shown in Figure 2;
- Figure 5: shows an exploded view of the weight assembly of the indicator shown in Figure 1;
- Figure 6: shows an end of a part of the weight assembly of the indicator shown in Figure 1 on a larger scale;
- Figure 7: shows a view from above of the attachment part of the indicator shown in Figure 1;
- Figure 8: shows a side view of the attachment shown in Figure 7; and
- Figure 9: shows an axial sectional view of the attachment part shown in Figure 7, taken in the plane indicated by the line IX-IX in Figure 7.

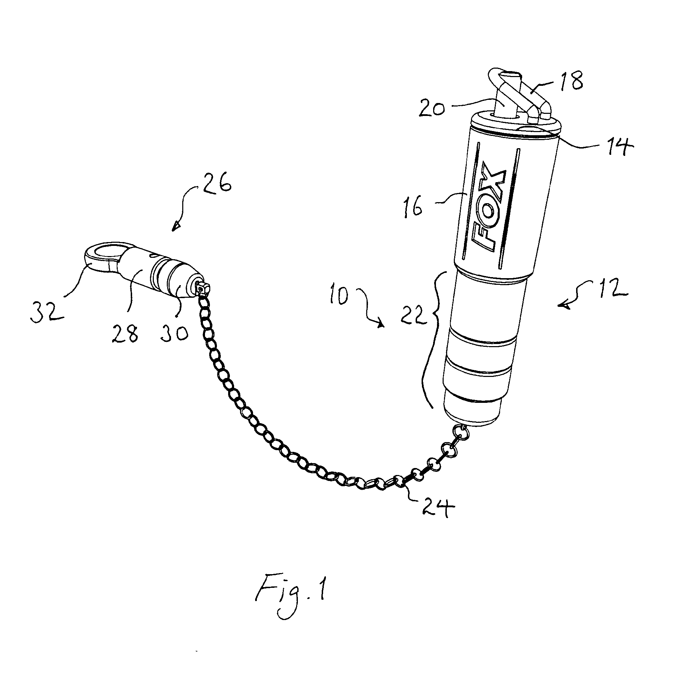

A fish-bite indicator 10 having a construction in the form of a hanger is shown in Figure 1. It comprises a weight assembly 12 comprising a generally cylindrical inner PTFE housing 14 surrounded by a close fitting sleeve 16. At an intended upper end of the weight assembly 12, there is a slanting U-shaped wire 18 having both of its ends anchored in an upper end of the housing 14. An engagement elongate plunger 20 extends through the housing 14 generally parallel to the axis thereof, and extends upwardly through the upper end thereof so that the upper end of the elongate plunger 20 projects slightly through the loop of the U-shaped wire 18.

A series of inter-engaging generally cylindrical hollow weights 22 are attached to the lower end of the housing 14.

A flexible chain 24 extends upwardly through the weights 22 and is attached, in a manner to be described herein, to the housing 14 at one end.

The other end of the chain 24 is attached, in a manner to be described in greater detail herein, to an attachment part 26. This has a generally cylindrical body 28, at one end of which there is an attachment device 30 to which one end of the chain 24 is attached, and at the other end of which there is a connector ring 32 integral with the body 28, the ring enabling the attachment part 26 to be readily secured, for example to a bank stick.

When the bite indicator 10 is put to use, the attachment part 26 is secured to a bank stick, and the weight assembly 12 engages a fishing line of a rod (not shown) by virtue of the line extending underneath the wire 18, between the latter and the housing 14 in such a manner that it is trapped by the plunger 20. If a fish takes a bite on the hook assembly at the end of the line of the rod (not shown), any movement it makes towards the rod will cause the hanger to drop. Correspondingly, any movement which the fish makes away from the rod will cause the weight assembly of the indicator to rise. The user may then make a strike whereby he lifts the rod upwardly from its rest (not shown). Although initially the weight assembly 12 will remain in engagement with the line of the rod, as the latter continues to be lifted the chain 24 will eventually become taut, pulling the plunger 20 downwardly in relation to the housing 14 and enabling the fishing line to escape from the looped wire 18. This frees the rod and the line completely from the indicator 10 and enables the angler to play the fish unhindered.

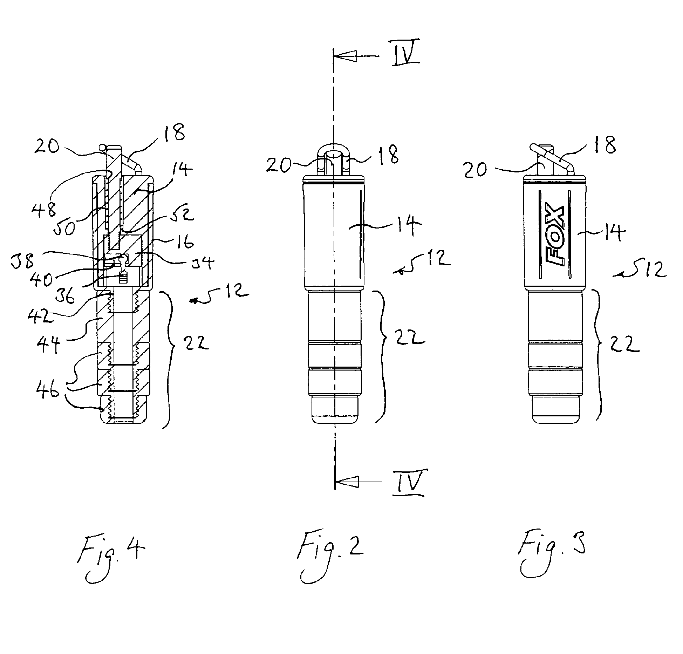

The bite indicator 10 will now be described in greater detail with reference to Figures 4 to 9.

Considering first of all the weight assembly 12, this is shown in greater detail in Figures 4 to 6. In particular, Figure 4 shows how the elongate plunger 20 is attached by screw-threading at its lower end to a metal block 34 received in a cylindrical hollow at the lower end of the housing 14 in such a manner that the block 34 is able to slide up and down that hollow. A metal spigot 36 has an upper end 38 held within a slot 40 within the block 34. It has a lower end, which is attached to one end of the chain 24 (not shown in Figure 4). A lower end of the sleeve 16 is provided with an externally screw-threaded tubular portion 42 by means of which an internally screw-threaded hollow cylindrical metal weight 44 is attached. Further weights 46 are connected in succession by corresponding screw-threaded connections to the weight 44.

The plunger 20 has a shoulder 48 close to its upper end, which is engaged by a compression spring 50 extending between that shoulder 48 and another shoulder 52 formed within the housing 14.

It will be appreciated therefore that when the chain 24 (not shown in Figure 4) is under tension by virtue of a strike being made by the user, the spigot 36 is pulled downwardly (relative to the housing 14) by the chain. This slides the block 34 downwardly through the hollow of the housing 14 and with it the plunger 20 against the force of the compression spring 50.

It will be appreciated therefore that once the tension in the chain 24 (not shown in Figure 4) is released, the spigot 36, block 34 and plunger 20 return to their initial positions by virtue of the restoring force of the compression spring 50.

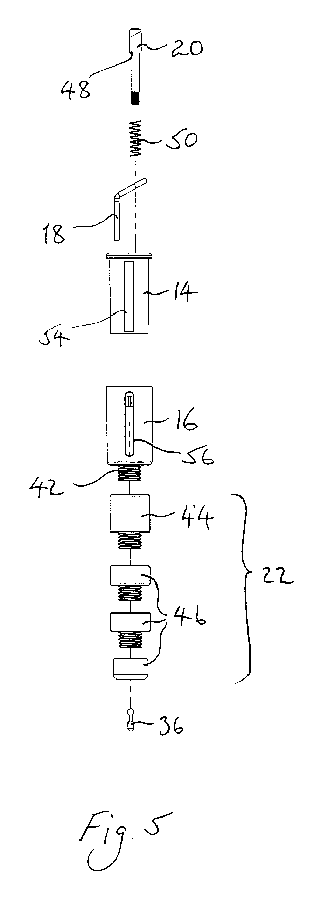

As can be seen from Figure 5, the housing 14 is provided with an elongate axially extending recess or slot 54 in its outer surface. The sleeve 16 is provided with an elongate axially extending slot 56 which, when the sleeve surrounds the housing 14, is in registration with the recess 54. The slot 56 is of slightly narrow width than the recess 54 so that a beta light can be inserted into the cavity 54, and once the sleeve 16 is pushed on to the housing 14, it cannot escape from the housing 14 because the width of the slot 56 is too narrow. At the same time the slot 56 enables light to pass out therefrom, and if the sleeve is made of a translucent material, the light may be diffused throughout the sleeve 16, so that the whole sleeve appears illuminated. The sleeve 16 is secured to the housing 14 by bayonet connection means 68.

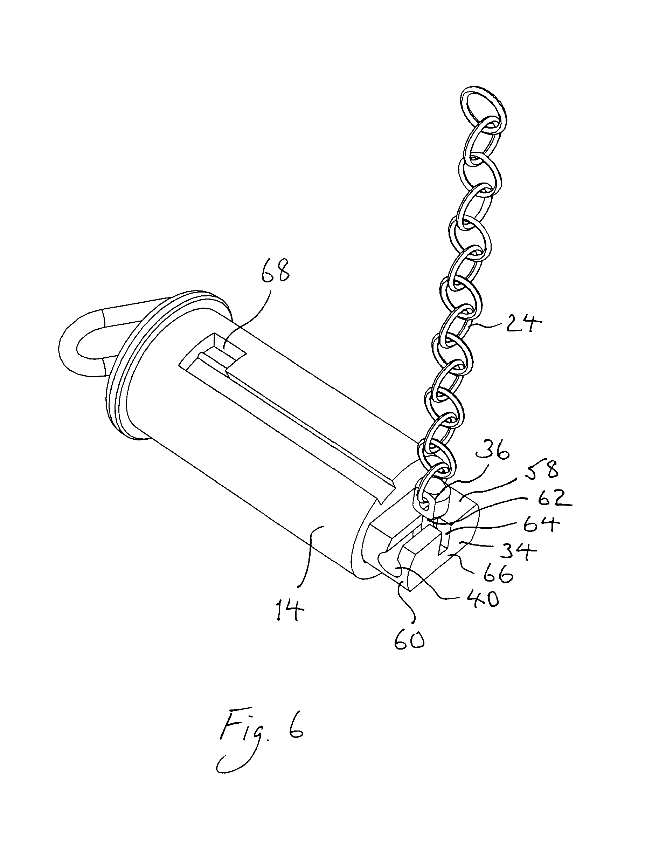

The manner in which the spigot 36 is connected to the block 34 is releasable and is shown in greater detail in Figure 6. Thus, the slot 40 opens out on to a first surface 58 of the block 34 and extends from one side 60 of the block 34 to a central position thereof. This slot has a generally keyhole shaped cross-section, so that it has a first inner portion which is of wider width than a second outer portion and it is the second portion which opens out on to the said first surface 58.

The end 38 of the spigot 36 is ball-shaped (and is not visible in Figure 6), and is connected to the other end of the spigot via a relatively narrow neck portion 62. The dimensions of the ball end 38 of the spigot 36 and the neck portion 62 thereof are such that the neck can slide through the narrower outer part of the slot 40 and the ball 38 can slide along the wider inner part of the slot 40, but the ball 38 is too wide to pass through the narrower outer part of the slot 40.

It will be seen that the slot 40 opens out at the side 60 of the block 34 enabling a complete release of the spigot 36 from the block 34 by sliding the ball end 38 and the neck 62 out of the side 60 of the block 34.

At the same time, a further slot 64 having the same width as the narrower outer part of the slot 40 extends from the slot 40 to an intended lower surface 66 of the block 34 where it opens out. The surface 66 is generally at right angles to the surface 58. This enables the spigot 36, after it has been slid to a position in registration with the slot 64, to be pivoted through an angle of 90° from the position it has in Figure 6 to a position in which the neck portion 62 extends generally axially relative to the housing 14, normally in an intended downward direction when the indicator 10 is in use. In this position, the spigot 36 is still retained by the block 34 because the ball end 38 thereof is too wide to pass through the slot 64.

The spigot 36 can be released from this position by rotating it through 90° to the position it has as shown in Figure 6 and then by sliding it along the slot 40 and out from the block at the side 60 thereof.

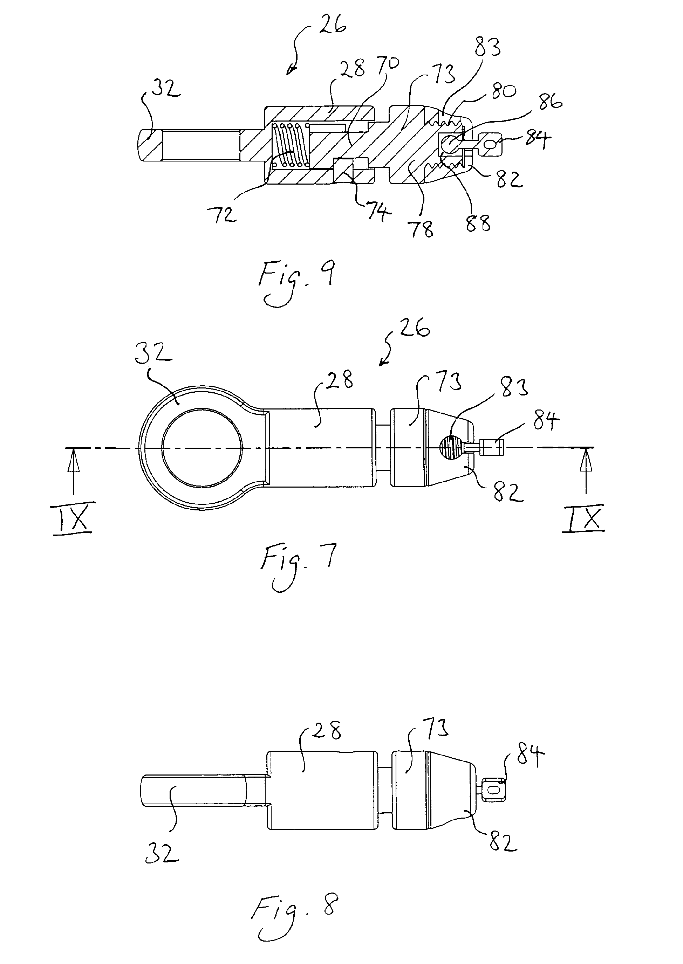

The hanger is assembled by attaching the spigot 36 to the block 34, threading the sleeve 16 on to the chain 24 and sliding it along the chain to the end thereof, which is attached to the spigot 36 and then on to the housing 14, to which it is secured by means of the bayonet formation 68. The plunger 20 is inserted into the housing 14 and screwed into the block 34. The desired number of weights 44 and 46 are threaded on to the chain 24, slid therealong and screwed to the sleeve 16 in the manner shown in Figure 4. The other end of the chain 24 is then connected to the attachment part 26. The latter is shown in greater detail in Figures 7 to 9.

Thus, the cylindrical body 28 is hollow and receives a rear end portion 70 of an attachment end 73 of the attachment part 26. The rear end portion 70 is slideable axially of the body 28. It is urged outwardly therefrom by a compression spring 72 up to the position shown in Figure 9 in which a shoulder of the rear end 70 rests against an abutment 74 of the body 28.

The connector ring 32 extends rearwardly from the body 28 and is integral therewith.

The attachment end 73 has a forwardly projecting externally screw-threaded hollow portion 80 to which is attached a hollow internally screw-threaded metal end portion 82 outwardly from which extends a spigot 84 which is attached to the chain 24 (not shown in Figures 7 to 9). The spigot 84 has a similar construction to that of the spigot 36, and the metal end portion 82 is formed with a slot 83 of keyhole cross-section to enable the spigot to be inserted into the end 82 before it is attached to the attachment end 73, with the spigot 84 aligned generally axially. When the end 82 is screwed on to the hollow portion 80, the ball end 86 of the spigot 84 is trapped within the hollow 88 of the portion 80.

Numerous modifications and variations to the illustrated bite indicator may occur to the reader without taking the resulting construction outside the scope of the present invention. For example, the end portion 38 of the spigot 36 (and correspondingly the end portion 86 of the spigot 84) may be barrel-shaped instead of being ball-shaped.

## Claims

1. A linkage device (34, 36) comprising a first part (34) having a first slot (40) in it with a cross-sectional shape having an inner portion and an outer portion, of narrower width than the inner portion, which opens out on to a first surface portion (58) of the first part (34), and a second slot (64) at an angle to the first slot (40) and opening out on to the said first surface portion (58) and also around to a second surface portion (66) of the said first part (34) which second surface portion (66) is generally at an angle to the said first surface portion (58), and a second part (36) having a head portion (38, 86) with a cross-section which is of less width than that of the inner portion of the cross-section of the said first slot (40), but is wider than the outer portion of the first slot (40) and is also wider than the second slot (64), so that it cannot escape therefrom, the said second part (36) also having a neck portion which is of narrower width than the outer portion of the said first slot (40) and which is of narrower width than the said second slot (64), so that the said second part (36) can be inserted into and then slid along the said first slot (40), with the head portion (38, 86) of the second part (36) sliding within and along the inner portion of the first slot (40) and the neck portion sliding within and along the outer portion of the first slot (40), whereupon the second part (36) can be rotated so that its neck moves into the second slot (64) and a portion of the second part (36) protrudes from the said second surface portion (66) of the first part (34).

2. A linkage device according to claim 1, **characterised in that** the said angle between the first and second slots (40, 64) is substantially a right angle.

3. A linkage device according to claim 1 or claim 2, **characterised in that** the said angle between the said first surface portion (58) and the said second surface portion (66) is substantially a right angle.

4. A linkage device according to any preceding claim, **characterised in that** the cross-section of the first slot (40) has the shape of a keyhole.

5. A linkage device according to any preceding claim, **characterised in that** the said head portion (38, 86) comprises a ball-shaped portion.

6. A linkage device according to any one of claims 1 to 4, **characterised in that** the said head portion (38, 86) comprises a cylindrical portion of generally circular cross-section.

7. A fish-bite indicator having the construction of a hanger, respective parts thereof being the said first and second parts (34, 36) of a linkage device as claimed in any one of claims 1 to 6.

8. A fish-bite indicator according to claim 7,
**characterised in that** the indicator comprises a weight assembly (12) and an attachment part (28) coupled to the weight assembly (12) by way of an elongate flexible part (24).

9. A fish-bite indicator according to claim 8,
**characterised in that** the elongate flexible part (24) comprises a chain.

10. A fish-bite indicator according to claim 8 or claim 9, **characterised in that** one end of the elongate flexible part (24) is secured to the weight assembly (12) by way of a linkage device (34, 36) as claimed in any one of claims 1 to 6.

11. A fish-bite indicator according to claim 10,
**characterised in that** the weight assembly (12) comprises a retractable portion (20) which projects from an upper end of the assembly as part of a fishing line engagement device, the said one end of the elongate flexible part (24) being attached to that portion (20) by way of the linkage device (34, 36) so that that portion (20) is retracted to release the fishing line when the latter is raised beyond a predetermined height.

12. A fish-bite indicator according to claim 9 or claim 11, **characterised in that** the other end of the chain or other elongate flexible part (24) is coupled to the attachment part (28) also by way of a linkage device (34, 36) as claimed in any one of claims 1 to 5.

13. An illuminator comprising a first generally cylindrical body (14) along which extends a beta light cavity (54) and a sleeve (16) which can be slid onto the cylindrical body (14) after a beta light has been inserted into the beta light cavity (54) thereof, the sleeve (16) having a slot (56) in it which corresponds in position to the beta light cavity (54), the slot (56) being narrower than the beta light cavity (54), so that light from the beta light within the cavity can pass through the slot (56), but not the beta light itself.

14. A fish-bite indicator (10) having the construction of a hanger, a part of which is an illuminator as claimed in claim 13.
